# EUROPÄISCHE PATENTANMELDUNG

(11) **EP 1 512 592 A1**
(43) Veröffentlichungstag der Anmeldung: **09.03.2005**
(21) Anmeldenummer: 04012969.4
(22) Anmeldetag: 02.06.2004
(51) Int. Cl.: B60S 1/34

(54) **Wischvorrichtung mit einer Steuereinheit**

(30) Priorität: 08.09.2003 DE 10341281
(71) Anmelder: ROBERT BOSCH GMBH, 70442 Stuttgart (DE)
(72) Erfinder: Zimmer, Joachim, 77880 Sasbach (DE); Weiler, Michael, 363-9 Chungchongbuk-Do (KR)

(57) **Zusammenfassung**

Die Erfindung geht aus von einer Wischvorrichtung, insbesondere eines Kraftfahrzeugs, die einen Wischarm (12a - 12i) sowie eine Steuereinheit (14a - 14i) zur Steuerung einer Lage (α) eines Wischblatts (16a - 16h) relativ zum Wischarm (12a - 12i) abhängig von zumindest einer Betriebsgröße (β), insbesondere einer Stellung des Wischarms (12a - 12i), aufweist.

Es wird vorgeschlagen, dass die Steuereinheit (14a - 14i) zumindest einen biegeweichen Teilbereich (18a - 18i) aufweist, über den eine Zugsteuerkraft (52a - 52e, 52i) ausgeübt werden kann.

## Beschreibung

### Stand der Technik

Die Erfindung geht aus von einer Wischvorrichtung nach dem Oberbegriff des Anspruchs 1.

Aus der DE 100 10 393 A1 ist eine Wischvorrichtung mit einer Steuereinheit bekannt, die einen Wischarm und ein an der Steuereinheit befestigtes Wischblatt aufweist. Es wird vorgeschlagen, den Wischarm als eine Parallelschwinge auszuführen, die mit zusätzlichen, die Steuereinheit bildenden Getriebegliedern verbunden ist. Mittels der Steuereinheit soll eine Lage des Wischblatts relativ zum Wischarm abhängig von einer Stellung des Wischarms gesteuert werden, und zwar in der Weise, dass die vom Wischblatt während einer Wischbewegung überstrichene Fläche möglichst weitgehend einer Rechteckform angenähert ist.

### Vorteile der Erfindung

Die Erfindung geht aus von einer Wischvorrichtung, insbesondere eines Kraftfahrzeugs, die einen Wischarm sowie eine Steuereinheit zur Steuerung einer Lage eines Wischblatts relativ zum Wischarm abhängig von zumindest einer Betriebsgröße, insbesondere einer Stellung des Wischarms, aufweist.

Es wird vorgeschlagen, dass die Steuereinheit zumindest einen biegeweichen Teilbereich aufweist, über den eine Zugsteuerkraft ausgeübt werden kann. Unter einem biegeweichen Teilbereich soll hier ein Bereich verstanden werden, über den sich im Wesentlichen nur Zugkräfte übertragen lassen. Insbesondere sollen in diesem Zusammenhang Seile, Ketten, Bänder und Drähte, wie sie insbesondere in Bowdenzügen verwendet werden, als biegeweiche Bauteile angesehen werden. Biegeweiche Bauteile können mit besonders kleinen Abmessungen in Richtungen senkrecht zu einer Richtung der übertragenen Zugsteuerkraft ausgelegt werden. Dadurch kann vorteilhaft eine schmale Bauweise der Wischvorrichtung erreicht, die Steuereinheit zumindest teilweise in den Wischarm platzsparend integriert und insbesondere bei einem Einsatz in Kraftfahrzeugen eine durch die Steuereinheit bedingte, zusätzliche Sichtbehinderung eines Kraftfahrzeugführers vermieden werden.

Dabei kann die Steuereinheit besonders vorteilhaft eine Konfiguration einer Verbindungseinheit zwischen Wischarm und Wischblatt steuern. Die Verbindungseinheit kann beispielsweise als ein Gelenk, ein Filmscharnier, eine Bandfeder, eine Blattfeder und/oder als ein translatorisch auf dem Wischarm bewegliches Bauteil ausgebildet sein.

Weist der Wischarm eine Wischstange und ein gelenkfrei mit der Wischstange verbundenes Befestigungsteil auf, lässt sich in Kombination mit einer einen biegeweichen Teilbereich umfassenden Steuereinheit vorteilhaft eine besonders flach bauende Wischvorrichtung mit guten aerodynamischen Eigenschaften erreichen. Ferner kann eine Steuereinheit mit einem biegeweichen Teilbereich an einem entsprechenden Wischarm besonders einfach montiert und in den Wischarm integriert werden.

Weist die Wischvorrichtung einen Federmechanismus auf, an dem der biegeweiche Teilbereich angreift, kann stets eine Vorspannung des biegeweichen Teilbereichs, dadurch eine eindeutig definierte Stellung desselben erreicht sowie konstruktiv einfach ein Rückstellmechanismus zur Verfügung gestellt werden. Grundsätzlich könnte jedoch auch ein kontrolliertes Rückstellen ohne Federmechanismus, zum Beispiel mit einem synchronisierten Stellmechanismus, erreicht werden.

Weist die Wischvorrichtung zumindest eine Fläche auf, auf der sich der biegeweiche Teilbereich im Verlauf einer Wischbewegung in einer ersten Richtung zumindest teilweise aufrollt und von der sich der biegeweiche Teilbereich im Verlauf einer Wischbewegung in einer zweiten Richtung zumindest teilweise abrollt, kann eine besonders platzsparende Bauweise erreicht werden.

Besonders vorteilhaft ist eine Ausgestaltung der Erfindung, in der die Fläche um eine Antriebsdrehachse des Wischarms gebogen ist und um die Antriebsdrehachse relativ zum Wischarm drehbar gelagert ist. Es kann eine Antriebsbewegung des Wischarms unmittelbar abgegriffen und durch den biegeweichen Teilbereich auf einen anderen Teil der Steuereinheit übertragen werden, so dass deren Konfiguration unmittelbar durch eine Stellung des Wischarms bestimmt ist, und zwar insbesondere, wenn die Fläche unbeweglich zu einer zu wischenden Fläche angeordnet ist. Ferner kann eine Abrollkontur der Fläche frei gestaltet werden, um einen vorteilhaften Verlauf der Steuerbewegung zu erreichen. Es ist jedoch prinzipiell auch eine Kopplung der Fläche und des biegeweichen Teilbereichs, insbesondere eines Drahtzugs, an ein Bauteil, zum Beispiel an eine Gelenkfeder, denkbar, das beweglich zur zu wischenden Fläche angeordnet ist, wenn das Bauteil seine Konfiguration oder Lage relativ zum Wischarm während einer Wischbewegung verändert.

In einer weiteren Ausgestaltung der Erfindung wird vorgeschlagen, dass der biegeweiche Teilbereich zumindest teilweise in einem Innenraum des Wischarms angeordnet ist. Dadurch kann vorteilhaft eine besonders schmal bauende Wischvorrichtung erreicht werden und der biegeweiche Teilbereich kann im Innenraum vorteilhaft geschützt und/oder geführt sein. Dabei sind sowohl geschlossene Innenräume, etwa eines röhrenförmigen Abschnitts des Wischarms, als auch offene Innenräume, etwa eines Abschnitts des Wischarms mit einem U-Profil, vorteilhaft einsetzbar.

Zudem wird vorgeschlagen, dass die Steuereinheit zumindest eine Führungsfläche für eine Bewegung des Wischblatts relativ zum Wischarm aufweist, wodurch eine sichere Kontrolle einer solchen Bewegung und insbesondere eines Anstellwinkels des Wischblatts an der zu wischenden Fläche ermöglicht wird.

Erzeugt in einer Arbeitsstellung zumindest ein Anteil der Zugsteuerkraft eine Auflagekraft, können vorteilhaft zusätzliche Elemente zur Erzeugung der Auflagekraft zumindest platzsparend und kostengünstig dimensioniert oder besonders vorteilhaft sogar vollständig eingespart werden.

In einer weiteren Ausgestaltung der Erfindung wird vorgeschlagen, dass der Wischarm von einer Arbeitsstellung federelastisch in eine die durch die Zugsteuerkraft stabilisierte Abklappstellung überführbar ist. In der Abklappstellung kann insbesondere eine komfortable Montage und Demontage des Wischblatts und/oder eine Reinigung der zu wischenden Fläche ermöglicht werden.

Die erfindungsgemäße Wischvorrichtung ist grundsätzlich für sämtliche dem Fachmann als sinnvoll erscheinende Wischanlagen geeignet, jedoch besonders vorteilhaft für Einarm-Wischanlagen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung der Funktionsweise einer Wischvorrichtung mit einer Steuereinheit zur Steuerung einer Lage eines Wischblatts relativ zu einem Wischarm,
- Fig. 2: die Wischvorrichtung aus Fig. 1 mit der Steuereinheit und das Wischblatt,
- Fig. 3: eine Explosionszeichnung eines befestigungsseitigen Bereichs der Wischvorrichtung aus Fig. 1 und 2 mit einer Fläche zum Abrollen eines biegeweichen Teilbereichs und mit einer Antriebswelle,
- Fig. 4: eine Hülse zur Bildung der Fläche aus Fig. 3 mit einer kreisförmigen Abrollkontur,
- Fig. 5 u. 6: einen befestigungsseitigen Bereich der Wischvorrichtung aus Fig. 1 - 4 in einem Teilschnitt und in einer Ansicht von schräg unten,
- Fig. 7 - 9: einen wischblattseitigen Bereich der Wischvorrichtung aus Fig. 1 - 6 in zwei Konfigurationen und einen Ausschnitt des biegeweichen Teilbereichs,
- Fig. 10 - 12: einen wischblattseitigen Bereich einer alternativen Wischvorrichtung mit einer Steuereinheit sowie eine Detailzeichnung eines Federmechanismus,
- Fig. 13: einen wischblattseitigen Bereich einer weiteren alternativen Wischvorrichtung mit einer Spiral-Druckfeder,
- Fig. 14 u. 15: einen wischblattseitigen Bereich einer weiteren alternativen Wischvorrichtung mit einer Blattfeder in zwei Ansichten,
- Fig. 16 u. 17: einen wischblattseitigen Bereich einer weiteren alternativen Wischvorrichtung mit einer an ein Rohr angenieteten Blattfeder,
- Fig. 18 u. 19: einen wischblattseitigen Bereich einer weiteren alternativen Wischvorrichtung mit einer mehrseitigen Führung für eine Steuerbewegung,
- Fig. 20 u. 21: einen wischblattseitigen Bereich einer weiteren alternativen Wischvorrichtung mit einem in einer mehrseitigen Führung integrierten Anschlag,
- Fig. 22 - 24: einen wischblattseitigen Bereich einer weiteren alternativen Wischvorrichtung mit einer zusätzlichen Steuerungsfunktion im Hinblick auf einen Anstellwinkel,
- Fig. 25 u. 26: einen befestigungsseitigen Bereich einer weiteren alternativen Wischvorrichtung in einer Abklappstellung und in einer Arbeitsstellung,
- Fig. 27: ein Befestigungsteil für eine Wischvorrichtung nach Fig. 25 und 26 schräg von unten,
- Fig. 28: eine Hülse für die Wischvorrichtung nach Fig. 25 - 27 mit einer von einer Kreisform abweichenden Abrollkontur,
- Fig. 29: einen Ausschnitt einer Wischstange für eine Wischvorrichtung nach Fig. 25 - 28 und
- Fig. 30 u. 31: eine Ansicht eines befestigungsseitigen Bereichs der montierten Wischvorrichtung nach Fig. 25 - 29 von schräg unten und eine Unteransicht eines vormontierten Wischarms nach Fig. 25 - 29.

### Beschreibung der Ausführungsbeispiele

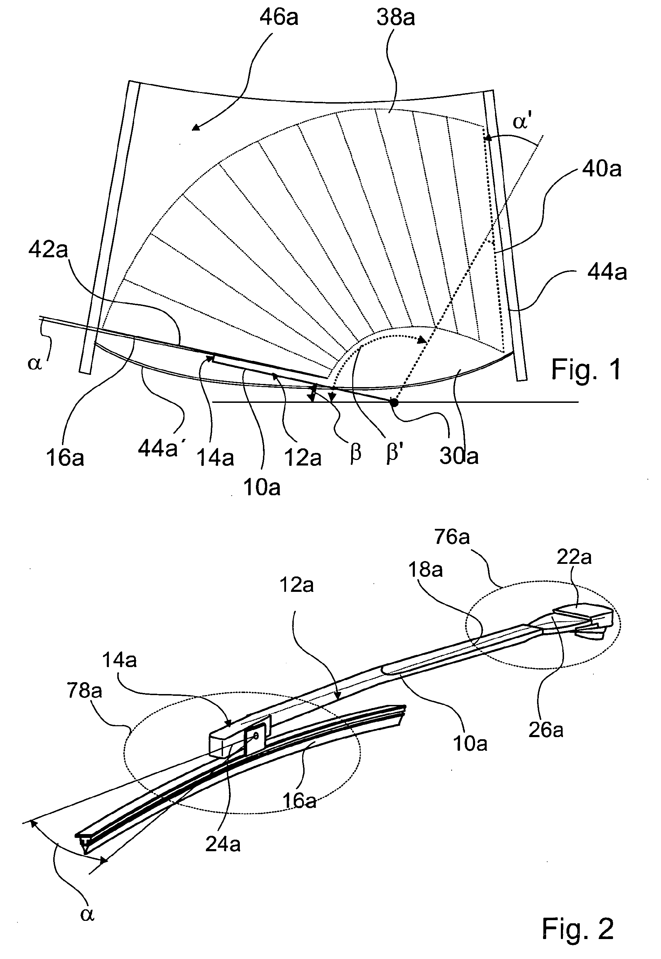

Fig. 1 zeigt eine schematische Darstellung der Funktionsweise einer Einarm-Wischvorrichtung eines Kraftfahrzeugs mit einer Steuereinheit 14a zur Steuerung einer durch einen Winkel eines Wischblatts 16a relativ zu einem Wischarm 12a bestimmten Lage α abhängig von einer Stellung β des Wischarms 12a. Durch eine Änderung der Lage α abhängig von der Stellung β des Wischarms 12a verläuft das Wischblatt 16a in einer oberen Umkehrlage 40a und einer unteren Umkehrlage 42a jeweils im Wesentlichen parallel zu einer Kante 44a, 44a' einer zu wischenden Fläche 46a, wobei gleichzeitig ein Anteil einer überstrichenen Fläche 38a an der zu wischenden Fläche 46a im Vergleich zu einer Wischbewegung mit konstanter Lage α vorteilhaft vergrößert ist.

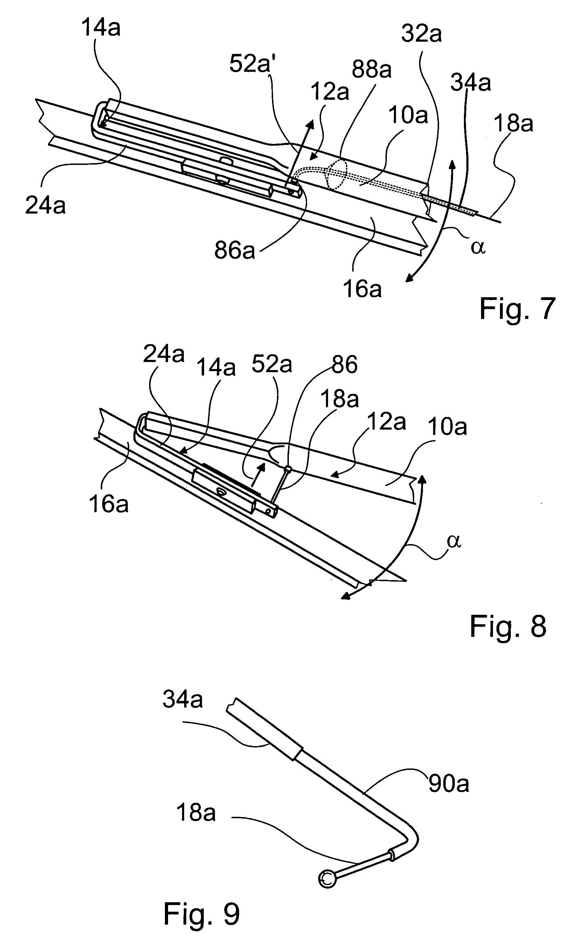

Die Lage α des Wischblatts 16a relativ zum Wischarm 12a ist über einen als Drahtzug ausgestalteten biegeweichen Teilbereich 18a und durch einen Federmechanismus 24a gesteuert, an dem der biegeweiche Teilbereich 18a angreift (Fig. 2 und Fig. 7). Der als Drahtzug ausgestaltete biegeweiche Teilbereich 18a verläuft teilweise in einem Innenraum 32a einer Wischstange 10a des Wischarms 12a und überträgt eine Zugsteuerkraft 52a zwischen einem befestigungsseitigen Bereich 76a und einem wischblattseitigen Bereich 78a der Wischvorrichtung. Ein Befestigungsteil 22a des Wischarms 12a ist über einen federelastischen Teilbereich 26a gelenkfrei mit der Wischstange 10a verbunden.

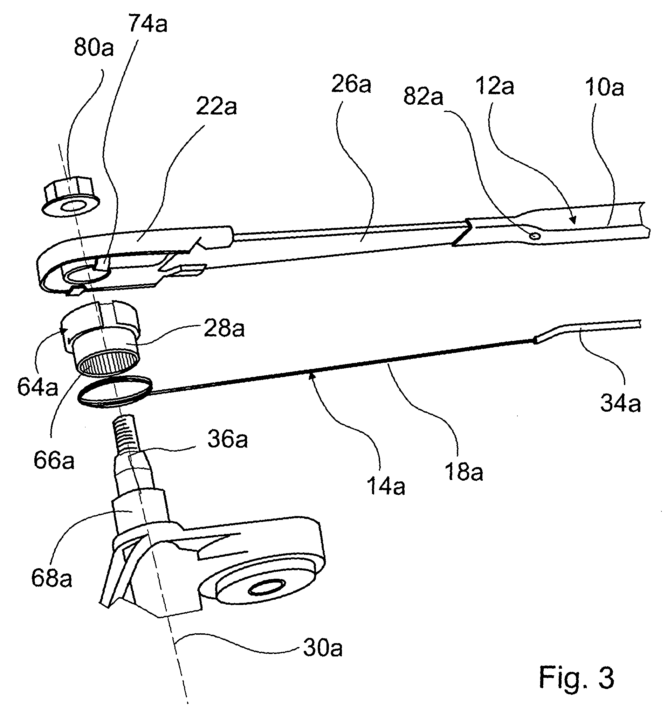

Fig. 3 zeigt eine Explosionszeichnung des befestigungsseitigen Bereichs 76a der Wischvorrichtung. In einer Vormontage wird der als Drahtzug ausgestaltete biegeweiche Teilbereich 18a durch eine Hülle 34a geführt und gemeinsam mit dieser durch eine Öffnung 82a in den Innenraum 32a der Wischstange 10a und durch denselben zum wischblattseitigen Bereich 78a der Wischvorrichtung geführt. Im wischblattseitigen Bereich 78a ist ein zuvor in die Wischstange 10a eingeführtes Führungselement 88a angeordnet, in dem die Hülle 34a abgestützt ist und durch das der als Drahtzug ausgestaltete biegeweiche Teilbereich 18a über ein gebogenes Metallröhrchen 90a des Führungselements 88a in einen Aufnahmebereich 86a geführt ist.

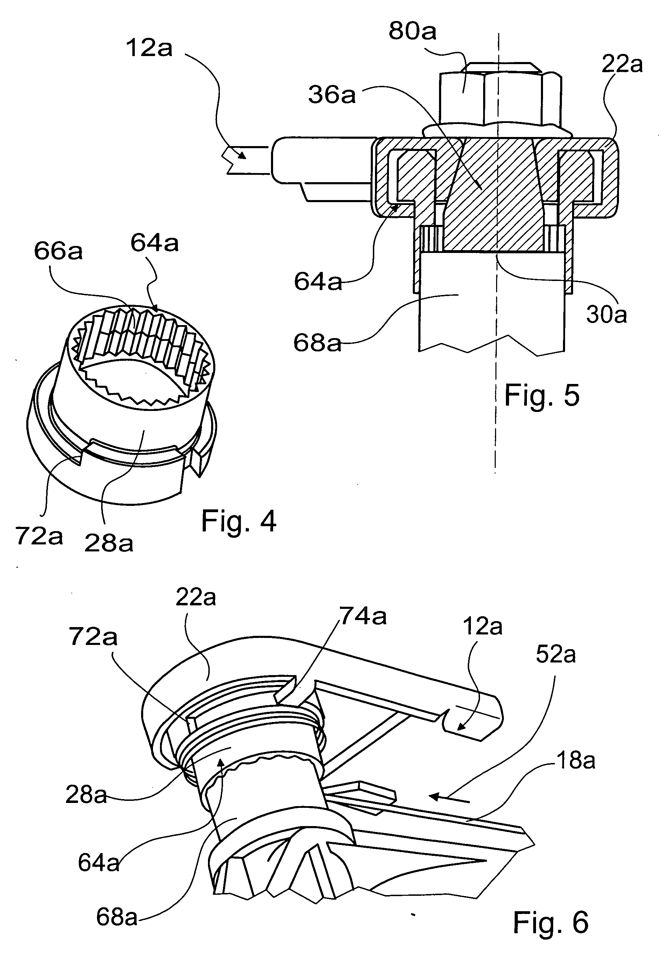

Der als Drahtzug ausgestaltete biegeweiche Teilbereich 18a wird mittels eines hier nicht dargestellten Mechanismus an einer Hülse 64a befestigt und unter Vorspannung auf einer zylindermantelförmigen Fläche 28a der Hülse 64a teilweise aufgerollt. Anschließend wird die Hülse 64a koaxial zu einer Antriebsdrehachse in einem Befestigungsbereich des Befestigungsteils 22a in dasselbe eingeschoben, wobei krallenförmige Anschlagelemente 74a des Befestigungsteils 22a durch nutenförmige Aussparungen eines Bunds der Hülse 64a hindurchgeführt werden. Durch die krallenförmigen Anschlagelemente 74a und durch den Bund sind das Befestigungsteil 22a und die Hülse 64a in axialer und durch einen konischen Blechdurchzug am Befestigungsteil 22a in radialer Richtung der Hülse 64a formschlüssig verbunden. Die Hülse 64a ist drehbar zum Befestigungsteil 22a gelagert und wird dabei durch einen an die Hülse 64a angeformten Anschlag 72a in Umfangsrichtung begrenzt, an den in einem vormontierten Zustand das Anschlagelement 74a des Befestigungsteils 22a anschlägt (Fig. 6), so dass eine Vorspannung des biegeweichen Teilbereichs 18a fixiert ist.

Bei einer Montage des Wischarms 12a an einem Kraftfahrzeug wird das Befestigungsteil 22a mit seinem Befestigungsbereich auf eine Antriebswelle 36a aufgesteckt und mittels einer Schraubenmutter 80a sowie einem an ein freies Ende der Antriebswelle 36a angebrachten Gewinde starr mit der Antriebswelle 36a verbunden (siehe auch Fig. 5). Dabei wird die Hülse 64a auf ein Formrohr 68a aufgepresst und mittels einer Rändelstruktur 66a an ihrem zylindrischen Innenumfang in Umfangsrichtung formschlüssig mit dem Formrohr 68a verbunden. Durch die Zylindersymmetrie des Formrohrs 68a und der Hülse 64a können axiale Toleranzen ausgeglichen werden.

Während einer Wischbewegung in einer ersten Richtung bewegt sich der Wischarm 12a relativ zur Hülse 64a, so dass der als Drahtzug ausgestaltete biegeweiche Teilbereich 18a weiter auf die Fläche 28a aufgerollt und während einer Wischbewegung in eine zweite Richtung von der Fläche 28a teilweise abgerollt wird, wobei die von der Stellung β des Wischarms 12a abhängige Zugsteuerkraft 52a über den als Drahtzug ausgestalteten biegeweichen Teilbereich 18a auf einen wischblattseitigen Bereich 78a der Steuereinheit 14a übertragen wird.

Im wischblattseitigen Bereich 78a der Wischvorrichtung (Fig. 7 und 8) ist der Federmechanismus 24a als eine in einer Konfiguration ohne äußere Krafteinwirkung V-förmige Blattfeder ausgebildet, deren erster Schenkel an einem Ende 56e des Wischarms 12e von diesem umlappt ist und an deren zweitem, freien Schenkel ein Wischblatt 16e befestigt ist. Der als Drahtzug ausgestaltete biegeweiche Teilbereich 18a greift an dem zweiten, freien Schenkel der Blattfeder an und übt die Zugsteuerkraft 52a auf diesen aus, die über das Metallröhrchen 90a und die Hülle 34a im Aufnahmebereich 86a abgestützt ist.

Unter der Einwirkung der Zugsteuerkraft 52a verkleinert sich ein Öffnungswinkel des als V-förmige Blattfeder ausgebildeten Federmechanismus 24a und die durch den Öffnungswinkel gegebene Lage α des Wischblatts 16a relativ zum Wischarm 12a verändert sich entsprechend. Bei einem maximalen Wert der Zugsteuerkraft 52a ist der Öffnungswinkel der V-förmigen Blattfeder im Wesentlichen Null (Fig. 7), während er in einer Konfiguration mit schwacher Zugsteuerkraft 52a (Fig. 8) in dem dargestellten Ausführungsbeispiel etwa 20° beträgt. Grundsätzlich sind jedoch auch andere Öffnungswinkel denkbar.

Die Steuereinheit 14a umfasst den als Drahtzug ausgestalteten biegeweichen Teilbereich 18a, den Federmechanismus 24a sowie die Hülse 64a und steuert insgesamt die Lage α des Wischblatts 16a relativ zum Wischarm 12a abhängig von der Stellung β des Wischarms 12a.

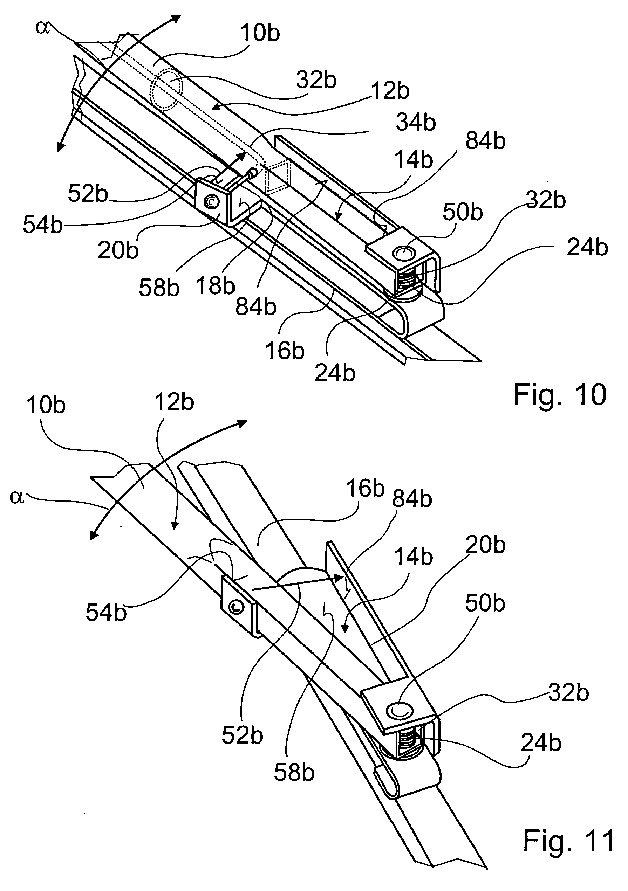

In den Fig. 10 bis 31 sind Ausschnitte oder Bauteile alternativer Wischvorrichtungen dargestellt. Bei den Ausführungsbeispielen sind in der Beschreibung im Wesentlichen gleiche Bauteile und gleiche Merkmale grundsätzlich mit den gleichen Bezugszeichen beziffert, wobei zur Unterscheidung der Ausführungsbeispiele Buchstaben hinzugefügt sind. Ferner kann bezüglich gleichbleibender Merkmale und Funktionen auf die Beschreibung zum Ausführungsbeispiel in den Fig. 1 - 9 verwiesen werden. Die nachfolgende Beschreibung beschränkt sich im Wesentlichen auf die Unterschiede zum Ausführungsbeispiel in den Fig. 1 - 9. Dabei betreffen die mit den Buchstaben b - h gekennzeichneten Ausführungsbeispiele Unterschiede zu Merkmalen des wischblattseitigen Bereichs 78a, während das mit dem Buchstaben i gekennzeichnete Ausführungsbeispiel Unterschiede zu Merkmalen des befestigungsseitigen Bereichs 76a des Ausführungsbeispiels aus Fig. 1 - 9 betrifft.

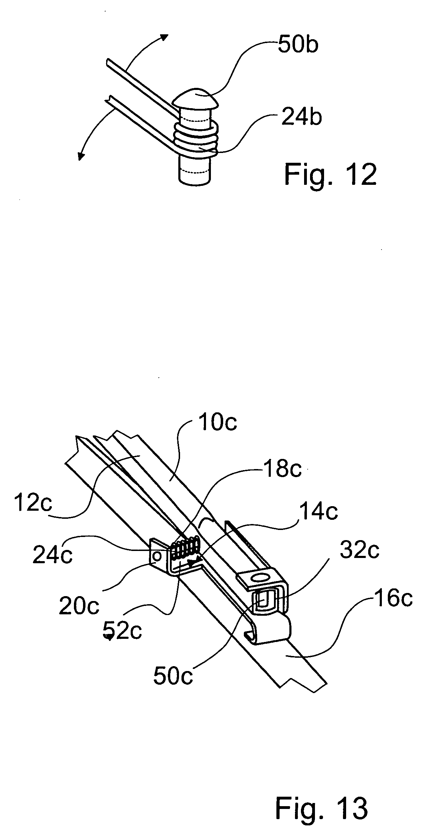

Fig. 10 und 11 zeigen einen wischblattseitigen Bereich einer alternativen Wischvorrichtung in jeweils einer Konfiguration mit einer starken (Fig. 11) und mit einer schwachen (Fig. 10) Zugsteuerkraft 52b. Ein biegeweicher Teilbereich 18b greift an einem federnd mit einem Wischblatt 16b verbundenen Hebelelement 20b an und übt die Zugsteuerkraft 52b auf dieses aus. Das in einer Aufsicht im Wesentlichen kreissektorförmige Hebelelement 20b ist über eine als Niet 50b ausgebildete Schwenkachse schwenkbar mit der Wischstange 10b verbunden. Ein Federmechanismus 24b ist als eine um den Niet 50b herum angeordnete Zweischenkelfeder ausgebildet (Fig. 12), die im Bereich der Schwenkachse eine der Zugsteuerkraft 52b entgegengesetzte Rückstellkraft über das Hebelelement 20b auf das Wischblatt 16b ausübt. Dazu greift ein erster Schenkel des Federmechanismus 24b an einem nicht dargestellten Anschlagelement im Innenraum 32b der Wischstange 10b und ein zweiter Schenkel an einem Anschlagelement am Hebelelement 20b an. Bei einer Schwenkbewegung um den Niet 50b wird die Wischstange 10b entlang einer Führungsfläche 58b des Hebelelements 20b geführt und durch einen aus dem Blech des Hebelelements 20b in einem 90°-Winkel aufgebogenen Anschlag 54b begrenzt. Ein ebenfalls aus dem Blech des Hebelelements 20b aufgebogener Sicherheitsanschlag 84b verhindert ein plötzliches, durch den vorgespannten Federmechanismus 24b beschleunigtes Herumschnellen des Wischblatts 16b nach einem Lösen des als Drahtzug ausgestalteten biegeweichen Teilbereichs 18b oder nach einem Reißen desselben.

Fig. 13 stellt einen wischblattseitigen Bereich einer weiteren alternativen Wischvorrichtung dar, in der ein Federmechanismus 24c als eine um einen als Drahtzug ausgestalteten biegeweichen Teilbereich 18c herum und zwischen einer Wischstange 10c und einem zum Ausführungsbeispiel in Fig. 10 - 12 baugleichen Hebelelement 20c angeordnete Spiral-Druckfeder ausgebildet ist.

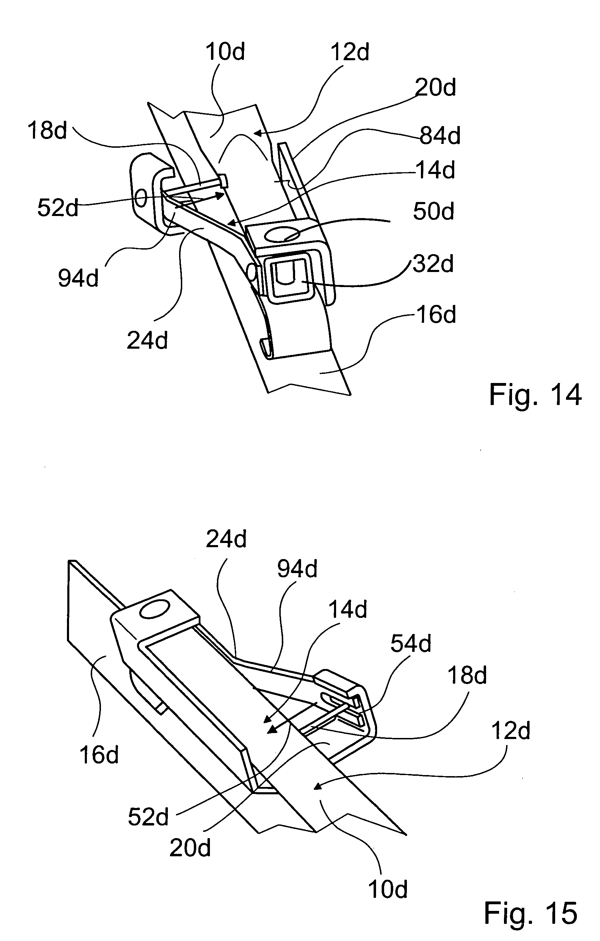

In einer weiteren alternativen Wischvorrichtung (Fig. 14 und 15) erzeugt ein als bogenförmige Blattfeder 94d ausgebildeter Federmechanismus 24d eine einer Zugsteuerkraft 52d entgegengesetzte Rückstellkraft. Der Federmechanismus 24d ist an einem freien Ende einer Wischstange 10d angenietet und sein freies, einem Befestigungsteil zugewandtes und von der Wischstange 10d fortgebogenes Ende weist einen Schlitz auf, durch den ein als Drahtzug ausgestalteter biegeweicher Teilbereich 18d geführt ist und durch den ein vorteilhafter Längserstrekkungsausgleich während einer Stellbewegung ermöglicht wird. Ein Anschlag 54d eines Hebelelements 20d liegt an dem freien Ende des Federmechanismus 24d an. Am Anschlag 54d greift eine Zugsteuerkraft 52d an und zieht den Anschlag 54d und damit den Federmechanismus 24d und das Wischblatt 16d in Richtung der Wischstange 10d.

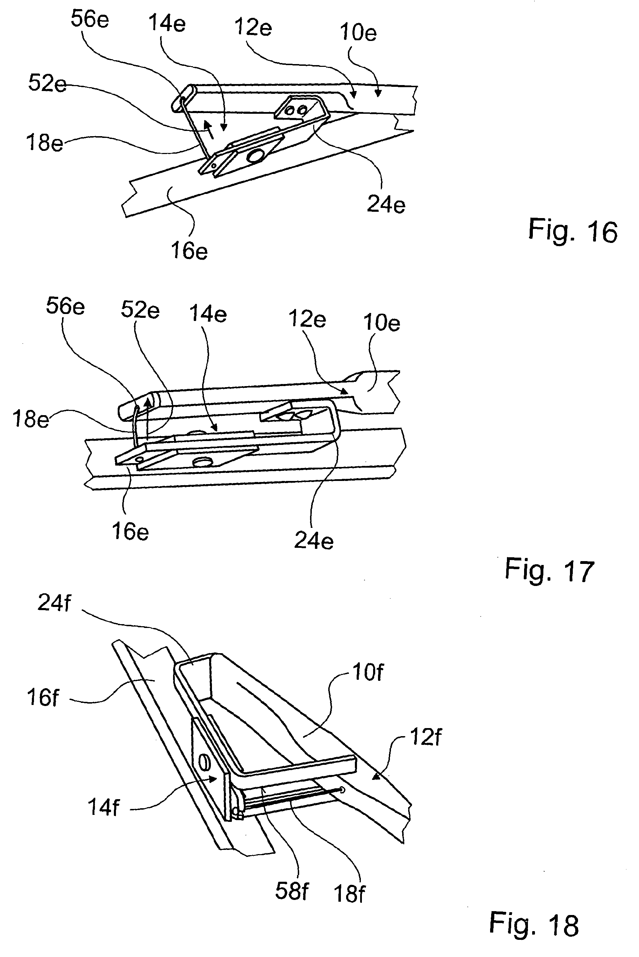

Fig. 16 und 17 stellen einen wischblattseitigen Bereich einer weiteren alternativen Wischvorrichtung in zwei Konfigurationen dar. Eine Schwenkachse ist durch einen als Blattfeder mit zwei 90°-Umlenkungen ausgebildeten, an einer Wischstange 10e angenieteten Federmechanismus 24e realisiert und in einer Entfernung von etwa 5cm zu einem Ende 56e der Wischstange 10e angeordnet. Die Blattfeder ragt mit ihrem freien Ende in Längserstreckung bis ca. zum Ende 56e der Wischstange 10e hin und steht in einer Konfiguration mit einer kleinen Zugsteuerkraft 52e (Fig. 16) schräg, in einem Winkel von etwa 30°, von der Wischstange 10e ab. Ein als Drahtzug ausgestalteter biegeweicher Teilbereich 18e übt über das Ende 56e der Wischstange 10e eine Zugsteuerkraft 52e auf das freie Ende des Federmechanismus 24e aus, an dem ein Wischblatt 16e befestigt ist. Durch ein Erhöhen der Zugsteuerkraft 52e verkleinert sich der Winkel, womit sich auch eine Lage α des Wischblatts 16e verändert.

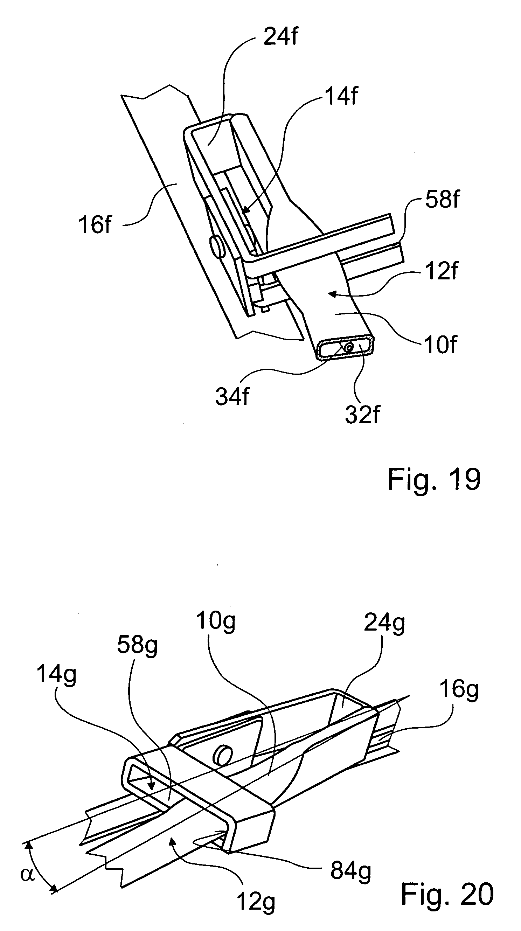

Fig. 18 und 19 zeigen einen wischblattseitigen Bereich einer weiteren alternativen Wischvorrichtung, in der eine von einem Rohrende einer Wischstange 10f umlappte, V-förmige Blattfeder im Wesentlichen einen Federmechanismus 24f wie in Fig. 7 und 8 darstellt und zusätzlich an ihrem freien Schenkel zwei parallele, in einem Winkel von 90° zum freien Schenkel in Richtung der Wischstange 10f umgelenkte Verlängerungen aufweist. Die Verlängerungen schließen die Wischstange 10f in einem abgeflachten Bereich derselben ein und bilden so beidseitig Führungsflächen 58f für eine Steuerbewegung.

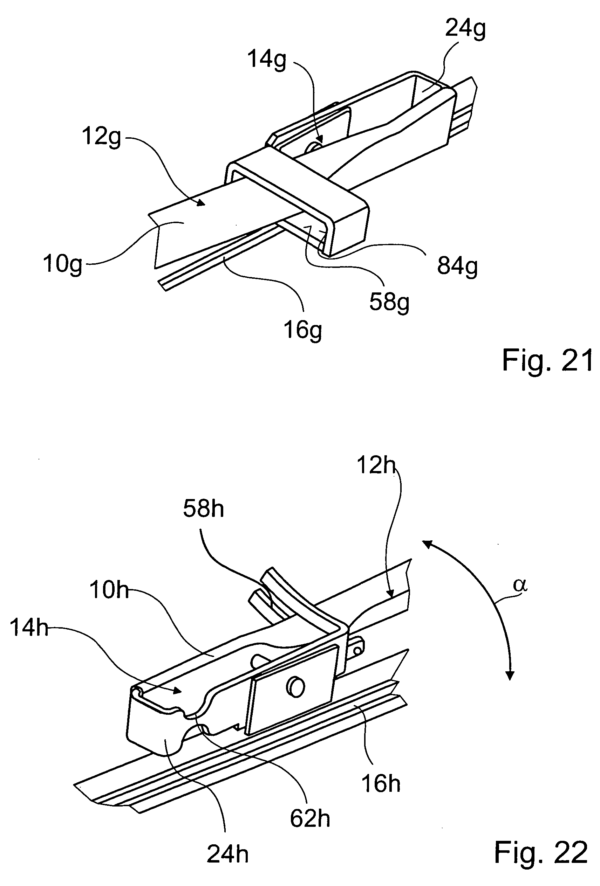

Fig. 20 und 21 stellen einen wischblattseitigen Bereich einer weiteren alternativen Wischvorrichtung dar. Ein als umlappte, V-förmige Blattfeder ausgebildeter Federmechanismus 24g weist hier neben beidseitigen Führungsflächen 58g zur Führung einer Steuerbewegung einen durch eine 90°-Umlenkung einer der Führungsflächen 58g gegebenen Sicherheitsanschlag 84g auf, der ein Abgleiten der Wischstange 10g aus der Führung verhindert.

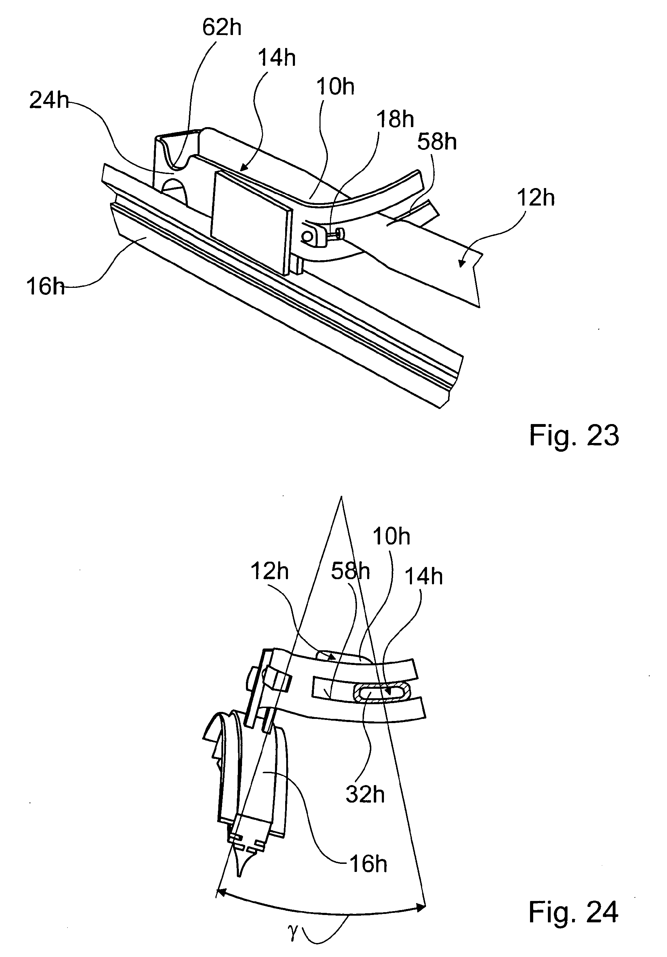

Fig. 22 - 24 stellen einen zum Ausführungsbeispiel in Fig. 20 und 21 analogen wischblattseitigen Bereich einer weiteren alternativen Wischvorrichtung dar, die durch gekrümmte Führungsflächen 58h gekennzeichnet ist, in denen ein abgeflachter Bereich der Wischstange 10h geführt ist und die bei einer Änderung einer Lage α eines Wischblatts 16h eine gleichzeitige Änderung eines Anstellwinkels γ erzwingen. Ein dazu notwendiger Freiheitsgrad ist durch einen an einer Torsionsstelle 62h geschwächten Blattfederquerschnitt eines als V-förmige Blattfeder ausgebildeten Federmechanismus 24h realisiert (Fig. 24).

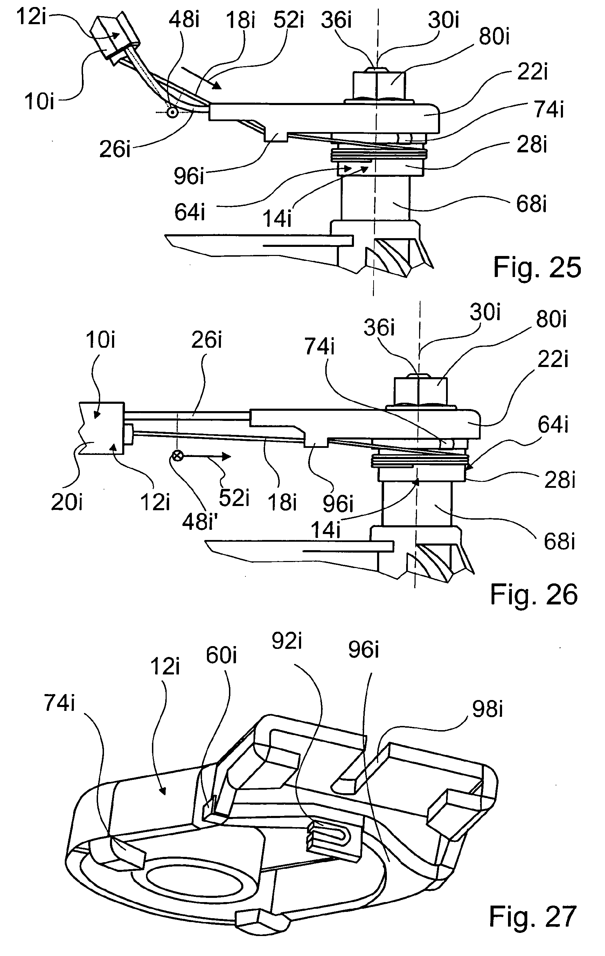

Fig. 25 - 31 zeigen eine befestigungsseitigen Bereich einer weiteren alternativen Wischvorrichtung, die neben einer Arbeitsstellung (Fig. 26) eine stabile Abklappstellung (Fig. 25) aufweist, die durch eine durch einen als Drahtzug ausgestalteten biegeweichen Teilbereich 18i ausgeübte Zugsteuerkraft 52i stabilisiert ist. Dabei weist ein federelastischer Teilbereich 26i eines Wischarms 12i und ein Befestigungsteil 22i jeweils eine schlitzförmige Öffnung 70i, 98i auf, durch die der als Drahtzug ausgestaltete biegeweiche Teilbereich 18i in der Abklappstellung den federelastischen Teilbereich 26i sowie das Befestigungsteil 22i teilweise durchdringen kann (Fig. 25). Die Zugsteuerkraft 52i des als Drahtzug ausgestalteten biegeweichen Teilbereichs 18i erzeugt in der Abklappstellung (Fig. 25) ein die Rückstellkraft des federelastischen Teilbereichs 26i kompensierendes und in der Arbeitsstellung (Fig. 26) ein eine Auflagekraft des Wischarms 12i erzeugendes Drehmoment.

Zudem weist die Wischvorrichtung eine Hülse 64i mit einer von einer Kreisform verschiedenen, nockenförmigen Abrollkontur auf. Durch eine geeignete Wahl der Abrollkontur kann eine vorgegebene funktionale Abhängigkeit einer Lage eines Wischblatts von einer Stellung des Wischarms 12i realisiert werden.

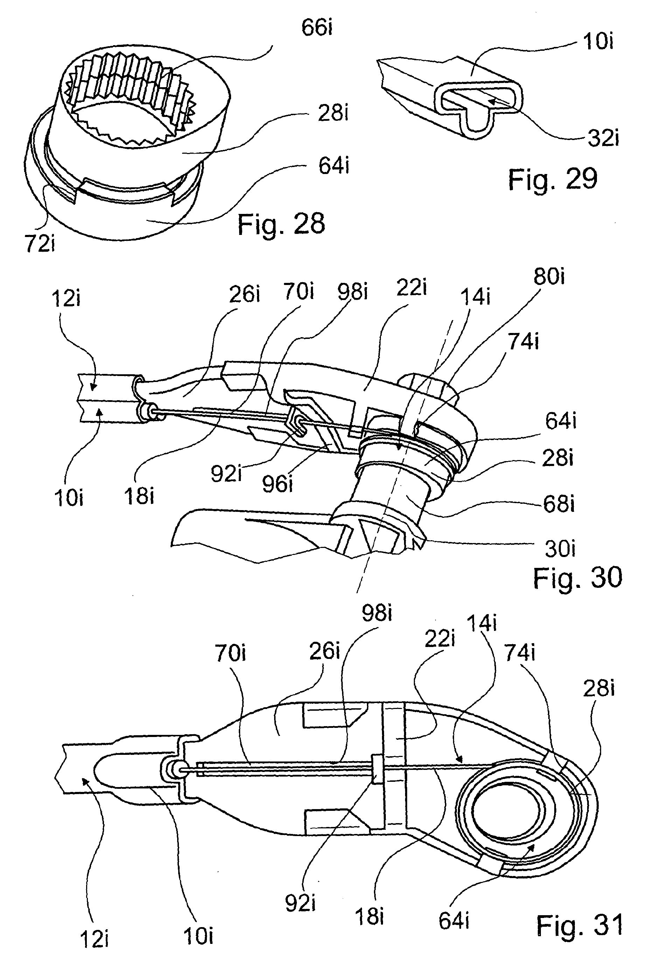

In einer Unteransicht (Fig. 31) hat das Befestigungsteil 22i eine gekröpfte Form, und eine Antriebsdrehachse ist aus einer Längsachse der Wischstange 10i um einen Abrollradius der Hülse 64i verschoben, so dass die Längsachse der Wischstange 10i in einer Stellung des Wischarms 12i eine Fläche 28i der Hülse 64i tangiert und der als Drahtzug ausgebildete biegeweiche Teilbereich 18i in der Unteransicht entlang der Längsachse verläuft.

Eine verschleißarme und definierte Führung des biegeweichen Teilbereichs 18i in einer vertikalen Richtung ist durch ein an einer Brücke 96i befestigtes Kunststoffteil 92i gegeben. Die einstückig mit dem Befestigungsteil 22i ausgeführte Brükke 96i ist mit ihrem freien Ende über eine Schwalbenschwanzpassung 60i mit dem Befestigungsteil 22i verbunden.

### Bezugszeichen

- 10: Wischstange
- 12: Wischarm
- 14: Steuereinheit
- 16: Wischblatt
- 18: Teilbereich
- 20: Hebelelement
- 22: Befestigungsteil
- 24: Federmechanismus
- 26: Teilbereich
- 28: Fläche
- 30: Antriebsdrehachse
- 32: Innenraum
- 34: Hülle
- 36: Antriebswelle
- 38: Fläche
- 40: Umkehrlage
- 42: Umkehrlage
- 44: Kante
- 46: Fläche
- 48: Drehmoment
- 50: Niet
- 52: Zugsteuerkraft
- 54: Anschlag
- 56: Ende
- 58: Führungsfläche
- 60: Schwalbenschwanzpassung
- 62: Torsionsstelle
- 64: Hülse
- 66: Rändelstruktur
- 68: Formrohr
- 70: Öffnung
- 72: Anschlag
- 74: Anschlagelement
- 76: Bereich
- 78: Bereich
- 80: Schraubenmutter
- 82: Öffnung
- 84: Sicherheitsanschlag
- 86: Aufnahmebereich
- 88: Führungselement
- 90: Metallröhrchen
- 92: Kunststoffteil
- 94: Blattfeder
- 96: Brücke
- 98: Öffnung
- α: Lage
- β: Stellung
- γ: Anstellwinkel

## Patentansprüche

1. Wischvorrichtung, insbesondere eines Kraftfahrzeugs, die einen Wischarm (12a - 12i) sowie eine Steuereinheit (14a - 14i) zur Steuerung einer Lage (α) eines Wischblatts (16a - 16h) relativ zum Wischarm (12a - 12i) abhängig von zumindest einer Betriebsgröße (β), insbesondere einer Stellung des Wischarms (12a - 12i), aufweist, **dadurch gekennzeichnet, dass** die Steuereinheit (14a - 14i) zumindest einen biegeweichen Teilbereich (18a - 18i) aufweist, über den eine Zugsteuerkraft (52a - 52e, 52i) ausgeübt werden kann.

2. Wischvorrichtung nach Anspruch 1, **gekennzeichnet durch** eine Wischstange (10a - 10i) und ein gelenkfrei mit der Wischstange (10a - 10i) verbundenes Befestigungsteil (22a, 22i) des Wischarms (12a - 12i).

3. Wischvorrichtung nach einem der vorhergehenden Ansprüche, **gekennzeichnet durch** einen Federmechanismus (24a - 24i), an dem der biegeweiche Teilbereich (18a - 18i) angreift.

4. Wischvorrichtung nach einem der vorhergehenden Ansprüche, **gekennzeichnet, durch** zumindest eine Fläche (28a, 28i), auf der sich der biegeweiche Teilbereich (18a - 18i) im Verlauf einer Wischbewegung in einer ersten Richtung zumindest teilweise aufrollt und von der sich der biegeweiche Teilbereich (18a - 18i) im Verlauf einer Wischbewegung in einer zweiten Richtung zumindest teilweise abrollt.

5. Wischvorrichtung nach Anspruch 5, **dadurch gekennzeichnet, dass** die Fläche (28a, 28i) um eine Antriebsdrehachse (30a, 30i) des Wischarms (12a - 12i) relativ zu demselben drehbar gelagert ist.

6. Wischvorrichtung nach einem der vorhergehenden Ansprüche, **dadurch gekennzeichnet, dass** der biegeweiche Teilbereich (18a - 18i) zumindest teilweise in einem Innenraum (32a - 32c, 32f, 32h - 32i) des Wischarms (12a - 12i) angeordnet ist.

7. Wischvorrichtung nach einem der vorhergehenden Ansprüche, **dadurch gekennzeichnet, dass** die Steuereinheit (14b - 14d, 14f - 14h) zumindest eine Führungsfläche (58b - 58d, 58f - 58h) für eine Bewegung des Wischblatts (16b - 16d, 16f - 16h) relativ zum Wischarm (12b - 12d, 12f - 12h) aufweist.

8. Wischvorrichtung nach einem der vorhergehenden Ansprüche, **dadurch gekennzeichnet, dass** in einer Arbeitsstellung zumindest ein Anteil der Zugsteuerkraft (52i) eine Auflagekraft erzeugt.

9. Wischvorrichtung nach einem der vorhergehenden Ansprüche, **dadurch gekennzeichnet, dass** der Wischarm (12i) von einer Arbeitsstellung federelastisch in eine durch die Zugsteuerkraft (52i) stabilisierte Abklappstellung überführbar ist.

10. Wischarm (12a - 12i) für eine Wischvorrichtung nach einem der vorhergehenden Ansprüche.
